# EUROPEAN PATENT APPLICATION

(11) **EP 1 956 218 A1**
(43) Date of publication of application: **13.08.2008**
(21) Application number: 06847061.6
(22) Date of filing: 22.11.2006
(51) Int. Cl.: F02D 19/08, F02B 7/00

(54) **SYSTEM FOR CONTROLLING MOTOR TORQUE OR LOAD FOR A DUAL MOTOR, WITH HOMOGENEOUS IGNITION COMBUSTION BY MEANS OF HETEROGENEOUS COMBUSTION**

(30) Priority: 23.11.2005 ES 200502876
(71) Applicant: ROS ROCA INDOX EQUIPOS E INGENIERIA, S.L., 25300 Tarrega (Lleida) (ES)
(72) Inventor: CALLEJON AGRAMUNT, Ismael, E-25300 Tarrega (Lleida) (ES); MORENO EGUILAZ, José Manuel, E-25300 Tarrega (Lleida) (ES); GEA TURRIELLA, Josep, E-25300 Tarrega (Lleida) (ES); ARTIGAS GOMEZ, Teodoro, E-25300 Tarrega (Lleida) (ES); GIRIBET CARLI, Josep, E-25300 Tarrega (Lleida) (ES)
(74) Representative: Aragones Forner, Rafael Angel
(86) International application number: PCT/ES2006/000647
(87) International publication number: WO 2007/063150

(57) **Abstract**

The invention relates to a system for controlling motor torque or load for a dual motor, with homogeneous ignition combustion by means of heterogeneous combustion. The inventive system includes an intake choke valve, an injection of diesel fuel for each rate of rotation and operating condition, and inflow of the main fuel in order to obtain a pre-determined target air7fuel ratio, in which the motor torque or load is controlled by varying the intake flow using the aforementioned intake choke valve.

## Description

A system for controlling the load or engine torque for a dual-fuel engine with homogeneous ignition combustion by means of heterogeneous combustion.

### OBJECT OF THE INVENTION

The present invention has as its object a system for controlling the load or engine torque for a dual-fuel engine with homogeneous ignition combustion by means of heterogeneous combustion.

### FIELD OF THE INVENTION

The system of the present invention relates to the reciprocating internal combustion engines being such as to operate under heterogeneous combustion conditions, said engines being also known as compression-ignition or diesel engines and adapted for the consumption of a main fuel forming homogeneous mixtures with the air under the conditions existing in the intake manifold in what is known as a dual-fuel engine.

The system of the present invention is specially applicable to those engines being subjected to substantial load (engine torque) changes, such as in the vehicle applications, as well as to power generation engines specially under changing working conditions.

### BACKGROUND OF THE INVENTION

The dual-fuel engines are characterised by the use of two fuels one of which namely being the main one is homogeneously mixed with air during the intake process whereas the second one is directly injected into the combustion chamber. The fuel being injected into the combustion chamber must be ignited before the fuel being introduced into the intake detonates due to the compression process. In this way the second fuel starts a heterogeneous combustion that becomes the ignition of the first fuel.

The main feature of this type of engines lies in the possibility of operating only with the fuel being directly injected into the combustion chamber, this latter fuel being normally diesel fuel, or in a dual-fuel mode with diesel fuel and the main fuel, this latter fuel having to be such as to form homogeneous and stable mixtures with air. When operating with the two fuels it is of interest to maximise the main fuel delivery since its use is strategically more interesting.

The combustion process being obtained as a result in the dual-fuel engine is a combustion process that can operate with the high compression ratio of the heterogeneous combustion engines or diesel engines and at the same time employ as a main fuel a fuel being specially suited to operate with homogeneous combustion engines being such as to carry out a provoked ignition, or Otto engines, and even fuels having a variable composition and giving rise to problems with the provoked ignition systems of this type of engines.

As a result of the combined use of both fuels a very high efficiency can be achieved in the transformation of heat into work due to the high compression ratio being attained in the operation of the engine and at the same time the global combustion velocity is much higher than the combustion velocity of the heterogeneous combustion engines, wherein upon the start of the combustion this latter is controlled by the diffusion process and thus proceeds in an excessively slow manner, specially at high rates of rotation, which entails a generation of particles with the consequent increase in the emission of pollutants.

The problems being associated with this type of engines lie in the proper control of the fuel mixture being introduced, said problems being also associated with the load (engine torque) controlling methodology.

In the heterogeneous combustion engines the load control is brought about through changing the air/fuel ratio, in such a way that the engine, in a behaviour that can be assimilated to a constant air intake, increases the engine torque at the same time as the quantity of fuel being injected into the combustion chamber is increased.

The control of the dual-fuel engine is carried out in the same manner, in such a way that in order to increase the engine torque an increase is brought about in the main fuel delivery to the intake while keeping or trying to keep the diesel fuel delivery constant.

The problems being associated with the combustion process lie in that at the transition between the idling condition, wherein the engine operates only with diesel fuel, and the full-load condition wherein a very substantial main fuel delivery is carried out a transition must be gone through during which the air/fuel ratio of the homogeneous mixture is too poor, the combustion process hence not taking place in an optimum manner and thus producing unburnts and inefficiency.

The usual approaches being aimed at solving this problem are based on the increase in the diesel fuel percentage being injected under partial load conditions, but this entails a problem since the quantity of diesel fuel being injected under partial load conditions is bigger than that being injected under full-load conditions, this entailing a control system wherein the quantity of diesel fuel must be increased and decreased as the load increases, this having to be combined with a gradual increase in the main fuel delivery.

The problems being associated with this type of control are specially serious in the quick transients in a vehicle wherein the transition from a low-load to a full-load condition must be gone through in a very quick manner, the diesel fuel delivery being made to experience a sudden increase before being again reduced in perfect combination with the increase in the main fuel delivery since otherwise a fuel excess could happen to be introduced or else an inadequate combination of both fuels could be brought about and thus cause knocking and maloperation of the engine.

### SUMMARY OF THE INVENTION

The present invention provides a load (or engine torque) control system allowing the correct operation of the engine in dual-fuel mode under all loading conditions.

The system for controlling the load (or engine torque) for a dual-fuel engine with homogeneous ignition combustion by means of heterogeneous combustion as per the invention is applicable to a heterogeneous combustion engine being also called compression-ignition or "diesel"-type engine and having a main fuel delivery at the intake for a dual-fuel operation.

The control system of the invention comprises at least some intake choking valves, a diesel fuel injection for each operating condition, and a main fuel delivery for attaining a target global air/fuel ratio, wherein the load control is obtained by means of the intake flow change (i.e. the change of the air/main fuel mixing quantity) being caused by the aforementioned intake choking valve.

According to the present invention, the main fuel delivery is determined as a function of the intake flow estimation (i.e. of the air/main fuel mixing quantity), the global air/fuel ratio being detected in the exhaust gas flow and the engine's operating conditions.

According to the invention, the intake flow estimation (i.e. the estimation of the air/main fuel mixing quantity) is carried out by means of a flowmeter or by means of a calculation based on different engine operation parameters.

According to the present invention, the main fuel delivery is carried out upstream or downstream of at least one intake flow (air/main fuel mixing quantity) choking valve.

According to the invention, the main fuel delivery is carried out in a joint manner for all of the cylinders and can also be carried out in a cylinder-grouped manner or in a separate manner for each cylinder.

According to the present invention, the measurement of the global air/fuel ratio is carried out at different points in the exhaust system.

According to the invention, the system of the invention is applicable to an engine with a supercharging system wherein the fuel delivery and choking is carried out upstream or downstream of the intake compressor.

According to the present invention, an electronic control unit is provided for controlling the operational parameters of the system.

According to the invention, the electronic control unit employs other parameters of the engine, the facility, the vehicle or the user for the control of the system.

According to the present invention, the main fuel has its composition changed during the operation of the engine.

These and other characterising features will be best made apparent by the following detailed description whose understanding will be made easier by the accompanying two sheets of drawings showing some practical embodiments being cited only by way of examples not limiting the scope of the present invention.

### DESCRIPTION OF THE DRAWINGS

In said drawings:
Fig. 1 is a diagrammatic view of the system for controlling the intake flow or engine torque for a dual-fuel engine with homogeneous ignition combustion by means of heterogeneous combustion wherein the main fuel delivery is carried out upstream of the choke valve, as per the present invention.
Fig. 2 is a diagrammatic view being similar to Fig. 1, wherein the main fuel delivery is carried out downstream of the choke valve.
Fig. 3 is a diagrammatic view being similar to Figs. 1 and 2, wherein the main fuel delivery is carried out between two choke valves being positioned in series.
Fig. 4 is a diagrammatic view being similar to Fig. 3, wherein the choke valves are positioned in parallel.
Fig. 5 is a diagrammatic view being similar to Fig. 2, wherein the main fuel delivery is carried out in a grouped manner.
Fig. 6 is a diagrammatic view being similar to Fig. 5, wherein the main fuel delivery is carried out individually.
Fig. 7 is a diagrammatic view being similar to Fig. 1, wherein the measurement of the global air/fuel ratio is carried out at several points in the exhaust system.
Fig. 8 is a diagrammatic view being similar to Fig. 1 and illustrating the application of the invention to an engine with supercharging by means of a turbosupercharger unit.
Fig. 9 is a diagrammatic view being similar to Fig. 1 and illustrating the incorporation of the electronic control unit.

### DETAILED DESCRIPTION OF A PREFERRED EMBODIMENT

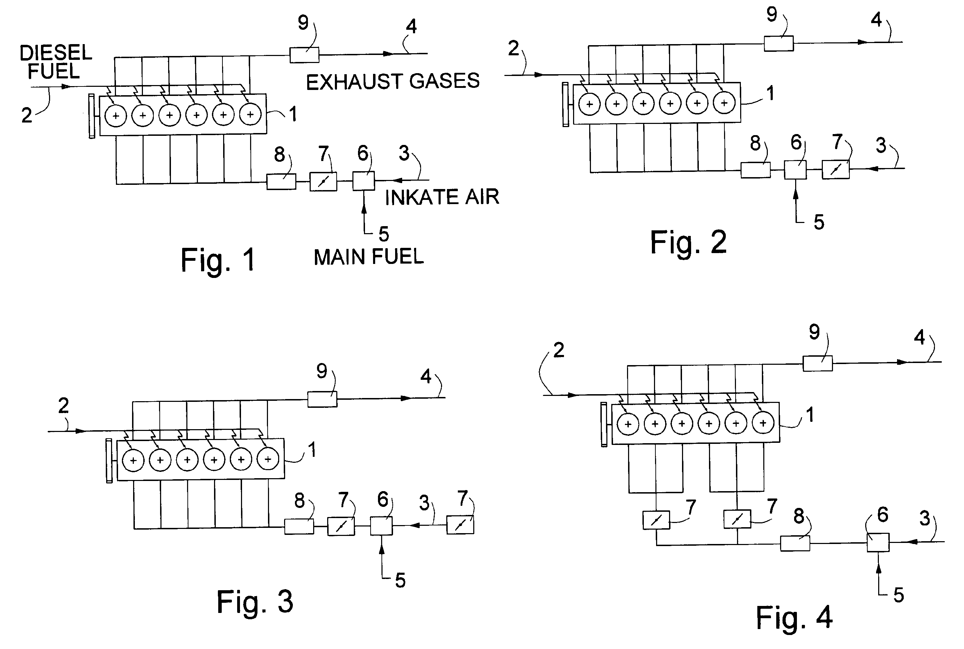

According to the drawings, Fig. 1 illustrates a preferential configuration of the preferred embodiment of the invention, wherein the reciprocating internal combustion engine -1- has a diesel fuel injection system -2- allowing the combustion of the air entering the engine -1- through the intake manifold -3- and exiting it after the combustion through the exhaust manifold -4-, and a main fuel line -5- for in a controlled manner delivering said main fuel to a point -6- of the intake manifold where it is mixed with the intake air to be thereupon controlled by the choke valve -7-. The mixture being introduced into the engine -1- is measured at the intake manifold at -8- and the global air/fuel ratio is measured at the exhaust manifold at -9-, in such a way that the adequate control can be established for defining the gas quantity being necessary in order to obtain the target air/fuel ratio.

Fig. 2 illustrates another configuration wherein the main fuel delivery -6- is carried out downstream of the choke valve -7-.

Fig. 3 illustrates another configuration of the system representing the air measurement using operation parameters of the engine for carrying out the estimation of the air flow being introduced into the engine, the air choking being carried out with several choke valves -7-being placed in series.

In another configuration of the system, Fig. 4 illustrates the air choking being carried out with several choke valves -7- being placed in parallel.

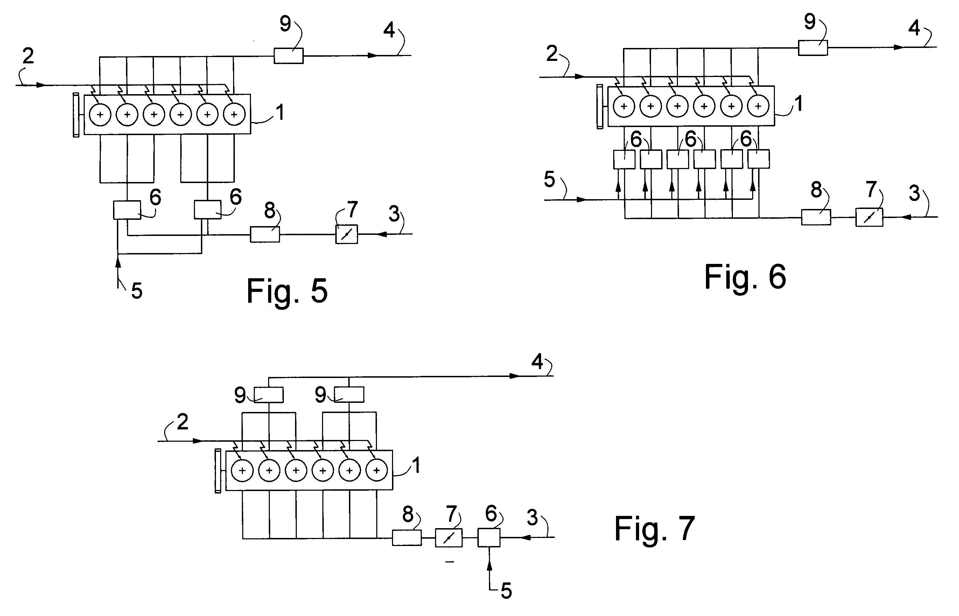

Fig. 5 illustrates another configuration wherein the main fuel delivery -6- is not single and is carried out in a grouped manner for several cylinders of the engine.

Fig. 6 illustrates another configuration wherein the main fuel delivery -6- is carried out in a separate manner into each cylinder.

In the configuration as per Fig. 7 the global air/fuel ratio measuring system -9- is not single, said measurement being carried out at more than one point and in a cylinder-grouped manner.

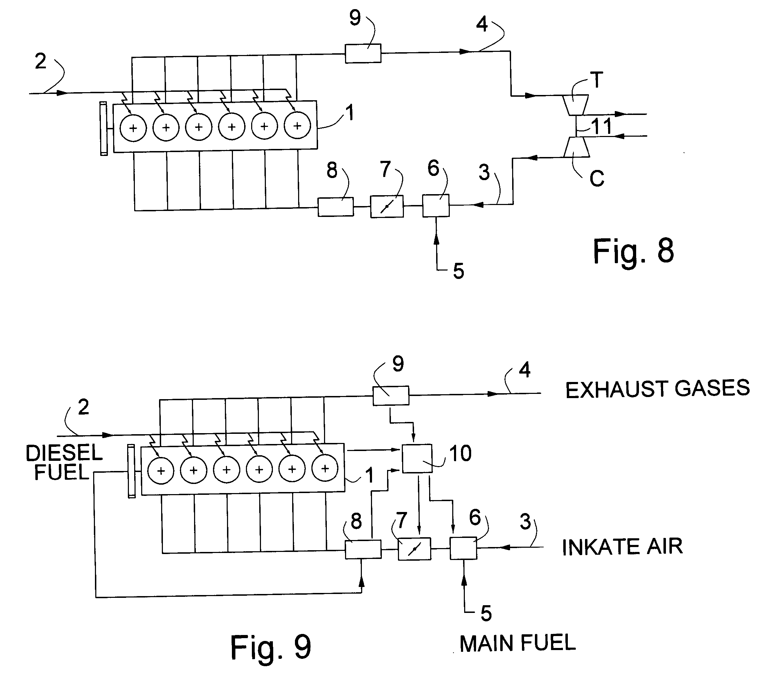

In the configuration being illustrated in Fig. 8 the system is employed in an engine being supercharged by a turbosupercharger unit -11- with the turbine -T- and the compressor -C-.

Fig. 9 in its turn illustrates the configuration incorporating the electronic control unit -10-.

## Claims

1. A system for controlling the load for a dual-fuel engine with homogeneous ignition combustion by means of heterogeneous combustion, of the type being applicable to a heterogeneous combustion engine being also called compression-ignition or "diesel"-type engine and having a main fuel delivery at the intake for a dual-fuel operation, **characterised in that** it comprises at least one intake choking valve (7), a diesel fuel injection (2) for each rate of rotation and operating condition, and at least one main fuel (5) delivery (6) for attaining a predetermined target global air/fuel ratio, wherein the load control is obtained by means of the intake flow change being caused by the aforementioned intake choking valve (7).

2. A system as per claim 1, **characterised in that** the main fuel (5) delivery (6) is determined as a function of the intake flow estimation (8) and the global air/fuel ratio being detected (9) in the exhaust gas flow and the operating conditions of the engine (1).

3. A system as per claims 1 and 2, **characterised in that** the intake flow estimation (8) is carried out by means of a flowmeter (8) and/or by means of a calculation based on different operation parameters of the engine (1).

4. A system as per claim 1, **characterised in that** the main fuel (5) delivery (6) is carried out upstream of at least one intake flow (8) choking valve (7).

5. A system as per claim 1, **characterised in that** the main fuel (5) delivery (6) is carried out downstream of at least one intake flow (8) choking valve (7).

6. A system as per claim 1, **characterised in that** the main fuel (5) delivery (6) is carried out between at least two intake flow (8) choking valves (7).

7. A system as per claims 4, 5 and 6, **characterised in that** the choke valves (7) are positioned in series.

8. A system as per claims 4, 5 and 6, **characterised in that** the choke valves (7) are positioned in parallel.

9. A system as per claim 1, **characterised in that** the main fuel (5) delivery is carried out in a joint manner for all of the cylinders of the engine (1).

10. A system as per claim 9, **characterised in that** the main fuel (5) delivery is carried out in a cylinder-grouped manner for the cylinders of the engine (1).

11. A system as per claim 9, **characterised in that** the main fuel (5) delivery is carried out in a separate manner for each cylinder of the engine (1).

12. A system as per claim 1, **characterised in that** the measurement of the global air/fuel ratio (9) is carried out at different points in the exhaust ducts.

13. A system as per the foregoing claims, **characterised in that** it is applicable to an engine (1) with supercharging means wherein said supercharging is carried out by means of a turbosupercharger (11).

14. A system as per claim 13, **characterised in that** the main fuel (5) delivery and the choking (7) are carried out upstream and/or downstream of the intake compressor.

15. A system as per claim 1, **characterised in that** the engine torque operational parameters are controlled by means of an electronic control unit (10).

16. A system as per claim 15, **characterised in that** the electronic control unit (10) employs other parameters of the engine (1), the facility, the vehicle and/or the user for the control of the engine torque.

17. A system as per claim 1, **characterised in that** the main fuel (5) has its composition changed during the operation of the engine (1).
